# EUROPÄISCHE PATENTSCHRIFT

(11) **EP 3 572 249 B1**
(45) Veröffentlichungstag und Bekanntmachung des Hinweises auf die Patenterteilung: **22.09.2021**
(21) Anmeldenummer: 19173448.2
(22) Anmeldetag: 09.05.2019
(51) Int. Cl.: B60D 1/02, B60D 1/26

(54) **FERNBETÄTIGBARE BOLZEN-ANHÄNGEKUPPLUNG MIT QUERKRAFTFREIER BETÄTIGUNGSWELLE**
REMOTELY ACTUATED BOLT TRAILER COUPLING WITH SHEARING-FORCE-FREE ACTUATION SHAFT
ATTELAGE DE REMORQUE À BOULON TÉLÉCOMMANDÉ POURVU D'ARBRE DE COMMANDE SANS APPLICATION DES FORCES TRANSVERSALES

(30) Priorität: 17.05.2018 DE 102018207795
(43) Veröffentlichungstag der Anmeldung: 27.11.2019
(73) Patentinhaber: JOST-Werke Deutschland GmbH, 63263 Neu-Isenburg (DE)
(72) Erfinder: Nemeth, László, 8446 Kislöd (HU); Schäfer, Stefan, 63450 Hanau (DE)
(74) Vertreter: Ruttensperger Lachnit Trossin Gomoll

(56) Entgegenhaltungen:
- EP-A1- 1 253 027
- EP-A2- 0 232 898
- DE-A1- 3 726 823
- DE-A1- 19 630 897
- DE-U1- 29 811 039
- DE-U1- 29 819 538
- JP-U- S5 290 810

## Beschreibung

Die vorliegende Erfindung betrifft eine fernbetätigbare Bolzen-Anhängekupplung nach dem Oberbegriff des Anspruchs 1.

Eine solche Anhängekupplung ist aus der DE 196 30 897 A1 bekannt.

Als weitere Bolzen-Anhängekupplungen sind Anhängekupplungen der Anmelderin bekannt, welche durch Nachrüstsätze der Firma WAP Fahrzeugtechnik GmbH (DE) mit einer Fernbetätigung in Gestalt einer doppeltwirkenden Kolben-Zylinder-Anordnung nachgerüstet wurden. Die Kolbenstange der Kolben-Zylinder-Anordnung des Nachrüstsatzes ist mittels eines Hebeltriebs mit der Betätigungswelle der Anhängekupplung derart gekoppelt, dass durch Ausfahren und Einziehen der Kolbenstange aus dem Zylinder der bekannten Kolben-Zylinder-Anordnung, bzw. in diesen hinein, der Kupplungsbolzen in wenigstens einer Richtung, üblicherweise in der Öffnungsrichtung, zwischen der Inaktivstellung und der Aktivstellung bewegt werden kann.

Nachteilig an der letztgenannten Fernbetätigung ist, dass durch den Hebeltrieb Quer- bzw. Radialkräfte (bezüglich der Wellenachse) von der Kolbenstange in die Betätigungswelle eingeleitet werden, welche die die Betätigungswelle zur Drehung im Kupplungskörper lagernden Lagerbauteile so stark belasten, dass deren Lebensdauer gegenüber der üblichen Lebensdauer ohne Fernbetätigung massiv verkürzt wird.

Aus der DE 37 26 823 A1 ist eine Bolzen-Anhängekupplung bekannt, deren Kupplungsbolzen mittels einer als Zahnstange ausgebildeten Kolbenstange eines Drucckolbens zwischen einer verriegelten und einer entriegelten Stellung verschiebbar ist.

Es sind außerdem Fernbetätigungen bekannt, die ein Betätigungsdrehmoment querkraftfrei in die Betätigungswelle einleiten können. Diese Fernbetätigungen verwenden eine Kolben-Zylinder-Anordnung mit rotatorischem Kolben, wie sie beispielsweise von der Firma Kinetrol Ltd. (UK) erhältlich sind. Der Nachteil dieser Lösung sind die mit der Beschaffung von Kolben-Zylinder-Anordnungen mit rotatorischen Kolben verbundenen hohen Kosten.

Der vorliegenden Anmeldung liegt daher die Aufgabe zugrunde, eine fernbetätigbare Bolzen-Anhängekupplung, wie sie eingangs der vorliegenden Anmeldung beschrieben ist, derart weiterzubilden, dass bei möglichst geringen Herstellungskosten die Betätigungswelle durch die Kolben-Zylinder-Anordnung drehbetätigbar ist, ohne dass durch die Drehbetätigung die Lebensdauer der Betätigungswelle spürbar verringert wird.

Diese Aufgabe wird gemäß der vorliegenden Erfindung durch eine Bolzen-Anhängekupplung mit allen Merkmalen des Anspruchs 1 gelöst.

Gemäß den vorliegend vorgestellten Ausführungsformen wird die von der Kolben-Zylinder-Anordnung ausgeübte Kraft nicht unmittelbar auf die Betätigungswelle, sondern auf eine Antriebswelle übertragen. Die Antriebswelle ist gesondert von der Betätigungswelle zur Rotation gelagert. Die Rotationslagerung der Antriebswelle kann daher entsprechend den durch die Kolben-Zylinder-Anordnung auftretenden Kräften und Momenten belastungsgerecht ausgelegt sein, sodass diese unter der betriebsmäßigen Belastung durch die Kolben-Zylinder-Anordnung nicht oder nur in einem vorhersehbaren, akzeptierten Maß verschleißt. Die gesondert von der Betätigungswelle gelagerte Antriebswelle kann somit keine oder kaum orthogonal zur Wellenachse wirkende Querkräfte auf die Betätigungswelle übertragen.

Somit kann eine kostengünstige Kolben-Zylinder-Anordnung mit im Wesentlichen linearer, jedenfalls nicht-rotatorischer, Relativbewegung zwischen Kolbenstange und Zylinder verwendet werden, ohne dass die zur Aufnahme von hohen Querkräften in der Regel nicht geeignete Betätigungswelle hierdurch übermäßig belastet würde.

Die eingangs genannte Vermittlungseinrichtung kann ein Getriebe oder/und ein Gestänge oder/und eine mechanische Kulissen-Steuervorrichtung sein. In der Fachwelt sind Vermittlungseinrichtungen, welche eine Drehbewegung der Betätigungswelle in eine lineare Bewegung des Kupplungsbolzens umsetzen, hinreichend bekannt.

Die ebenfalls genannte Kupplungsachse ist eine virtuelle Achse, längs welcher eine Zugöse in einer idealen Annäherungs- oder Entfernungsbewegung zum Kupplungsmaul hin oder von diesem weg bewegt wird, um die Zugöse formschlüssig mit dem Kupplungsbolzen zu koppeln oder eine bestehende Kupplung zu lösen. Da der Kupplungsbolzen die Zugöse in der Regel im Kupplungszustand durchsetzt, verläuft die Kupplungsachse orthogonal zur Bewegungsachse des Kupplungsbolzens und verläuft auch orthogonal zur Längsachse des Kupplungsbolzens. Im fertig montierten Zustand der Anhängekupplung verläuft die Kupplungsachse parallel zur Rollachse des die Anhängekupplung tragenden Fahrzeugs. Üblicherweise verläuft die Kupplungsachse parallel zu einer Längsrichtung einer Zugstange, mit welcher die Anhängekupplung an einem Fahrzeug festgelegt wird.

Die Betätigungswelle ist an den genannten Bolzen-Anhängekupplungen (nachfolgend auch nur als "Anhängekupplungen" bezeichnet) häufig als Handhebelwelle zur manuellen Betätigung vorgesehen. Die Wellenachse verläuft daher bevorzugt, aber nicht notwendigerweise, orthogonal sowohl zur Bewegungsachse des Kupplungsbolzens als auch zur Kupplungsachse.

Der Begriff "Bolzenantrieb" bedeutet nicht, dass dieser die kinematische Energie für eine Bewegung des Kupplungsbolzens bereitstellt. Es ist ausreichend, dass eine Betätigung des Bolzenantriebs in ursächlichem Zusammenhang mit der Bolzenbewegung steht. Der Bolzenantrieb kann daher für wenigstens eine Bewegungsrichtung des Kupplungsbolzens ein bloßer Bewegungsauslöser sein, der auf seine Betätigung hin die Übertragung von Energie aus einem Energiespeicher auf den Kupplungsbolzen zulässt.

Grundsätzlich kann daran gedacht sein, dass die Antriebswelle mit der Betätigungswelle über ein Getriebe gekoppelt ist, das eine Drehbewegung und ein Drehmoment der Antriebswelle auf die Betätigungswelle überträgt. Dementsprechend können grundsätzlich die Antriebswelle und die Betätigungswelle mit gekreuzten Achsen oder mit parallelen, jedoch versetzten Achsen angeordnet sein. Allerdings können derartige Anordnungen und Kupplungen von Antriebswelle und Betätigungswelle immer noch an der Betätigungswelle zum Auftreten von Querkräften führen, die erneut die Drehlagerung der Betätigungswelle unerwünscht belasten können. Ein vollständiger Ausschluss von einer Übertragung von Querkräften von der Antriebswelle auf die Betätigungswelle kann in vorteilhafter Weiterbildung der vorliegenden Erfindung jedoch dadurch erreicht werden, dass die Antriebsachse und die Wellenachse koaxial sind.

Die Rotationsantriebsformation der Antriebswelle kann im einfachsten Fall ein radial von der Antriebswelle abstehender Hebel sein. Der Hebel kann einstückig mit der Antriebswelle ausgebildet sein oder kann an diese anmontiert sein, etwa durch Verschraubung. Die Rotationsantriebsformation kann ebenso eine Exzenter-Scheibe sein, welche die Antriebswelle umgibt. Die Exzenter-Scheibe dient dann wiederum als Hebel, um eine Kraft der Kolben-Zylinder-Anordnung in ein an der Antriebswelle um deren Antriebsachse wirkendes Drehmoment zu übersetzen. Die Exzenter-Scheibe kann materialschlüssig mit der Antriebswelle verbunden sein, etwa durch Verschweißen oder Verlöten, oder sie kann lösbar mit der Antriebswelle verbunden sein, beispielsweise durch ein Keilwellenprofil oder durch eine um die Antriebsachse umlaufende polyedrische Kopplungsformation, jeweils mit einer entsprechenden Gegenformation auf Seiten der Antriebswelle.

Da bei einer Kopplung einer linear beweglichen Kolbenstange mit einer rotatorisch beweglichen Antriebswelle zumindest das mit der Antriebswelle verbundene Längsende der Kopplungsstange während einer Ausfahrbewegung oder auch während einer Einzugsbewegung eine Kreisbahn beschreibt, während das entgegengesetzte, dem Zylinder näher gelegene Längsende der Kopplungsstange eine lineare Bewegung ausführt, ist es zur Vermeidung von Spannungen in den beteiligten Bauteilen vorteilhaft, wenn ein entsprechender Bewegungsausgleich vorgesehen ist. Grundsätzlich kann daran gedacht sein, einen solchen Bewegungsausgleich an der Kopplungsstelle der Kopplungsstange mit der Antriebswelle, etwa an dem oben genannten Hebel oder an der Exzenter-Scheibe, vorzusehen, beispielsweise in Gestalt einer entsprechend formelastischen Kopplungsformation. Einfacher und deshalb erfindungsgemäß vorgesehen ist jedoch, dass die Kolbenstange zumindest während einer Ausfahr- oder/und Einzugsbewegung um eine mit der Kolbenstangenlängsachse einen Winkel, bevorzugt einen rechten Winkel, einschließende Schwenkachse schwenkbar ist.

Dies kann beispielsweise dadurch realisiert sein, dass die Kolben-Zylinder-Anordnung um die genannte Schwenkachse schwenkbar mit dem kupplungskörperfesten Widerlager verbunden ist. Wenngleich grundsätzlich möglich ist, die Kopplungsstange mit dem Widerlager und den Zylinder mit der Antriebswelle zu koppeln, ist es dennoch schon aufgrund der Abmessungen der beteiligten Bauteile bevorzugt, den Zylinder mit dem kupplungskörperfesten Widerlager zu verbinden.

Zur Aufnahme der Kolben-Zylinder-Anordnung des Bolzenantriebs an der Anhängekupplung kann diese eine Lagerformation umfassen, welche zwei bezogen auf die Antriebsachse mit axialem Abstand voneinander angeordnete kupplungskörperfeste Wellenlagerabschnitte mit je einem Rotationslager der Antriebswelle aufweist, und welche das Widerlager aufweist.

Grundsätzlich kann die Lagerformation einstückig mit dem Kupplungskörper ausgebildet sein, beispielsweise durch Verwenden einer entsprechenden Gussform im Falle einer gusstechnischen Herstellung des Kupplungskörpers oder wenigstens eines die Lagerformation aufweisenden Abschnitts des Kupplungskörpers. Für eine Nachrüstung bereits bestehender Anhängekupplungen ist es jedoch vorteilhaft, wenn die Lagerformation an einem gesondert vom Kupplungskörper ausgebildeten und mit diesem verbundenen Lagerbauteil vorgesehen ist. Vorzugsweise ist das Lagerbauteil ein grob U-förmiges Lagerbauteil, das in kompakter, wenig Bauraumbeanspruchung dergestalt sowohl die Kolben-Zylinder-Anordnung als auch die Antriebswelle zuverlässig lagern kann. Mit Abstand voneinander angeordnete Schenkel des grob U-förmigen Lagerbauteils können die Wellenlagerabschnitte bilden, an welchen jeweils ein Abschnitt der Antriebswelle zu Rotation gelagert ist. Eine die Schenkel verbindende Basis des grob U-förmigen Lagerbauteils kann dann das Widerlager bilden.

Der Zylinder der Kolben-Zylinder-Anordnung kann sogar starr mit dem Kupplungskörper, insbesondere der Lagerformation, besonders bevorzugt dem Lagerbauteil verbunden sein, wenn die Kolben-Zylinder-Anordnung einen Membranzylinder umfasst. Dann kann nämlich die oben genannte Schwenkbeweglichkeit der Kolbenstange um die Schwenkachse durch die Verformbarkeit einer die Kolbenstange tragenden Membran des Membranzylinders erreicht werden.

Das Bolzen-Aufnahmegehäuse, welches in der Fachwelt häufig auch als "Automatikgehäuse" bezeichnet wird, steht im fertig an ein Fahrzeug angebrachten Zustand der Anhängekupplung in der Regel parallel zur Gierachse des Fahrzeugs vom Kupplungsmaul ab. Es bildet den höchsten Punkt der Anhängekupplung über dem Aufstandsuntergrund des die Kupplung tragenden Fahrzeugs. Eine fernbetätigbare, jedoch räumlich kompakte Anhängekupplung kann dadurch erreicht werden, dass die Kolben-Zylinder-Anordnung neben dem Bolzen-Aufnahmegehäuse angeordnet ist. Bevorzugt erstreckt sich die Kolben-Zylinder-Anordnung in Richtung parallel zur Bewegungsachse des Kupplungsbolzens nicht weiter vom Kupplungsmaul weg als das Bolzen-Aufnahmegehäuse, sodass dieses im montierten Zustand höchster Punkt der Kupplung bleibt. Dabei ist die Kolben-Zylinder-Anordnung bevorzugt in einer sowohl zur Bewegungsachse als auch zur Kupplungsachse orthogonalen Richtung neben dem Bolzen-Aufnahmegehäuse angeordnet.

Die kompakte Bauart kann noch dadurch unterstützt werden, dass die Kolbenstangenlängsachse mit einer Parallelen zur Kupplungsachse einen Winkel von nicht mehr als 20° einschließt. Bevorzugt gilt dies unabhängig vom Betriebszustand der Kolben-Zylinder-Anordnung. Wenigstens sollte der eingeschlossene Winkel die angegebenen 20° weder im maximal eingefahrenen noch im maximal ausgefahrenen Zustand der Kolbenstange überschritten werden.

Zum Schutz vor Beschädigungen kann die Anhängekupplung eine Verkleidungsformation aufweisen, welche die Kolben-Zylinder-Anordnung gegen eine Annäherung eines Bauteils in einer Richtung parallel zur Kupplungsachse abschirmt. Das Bauteil, vor dessen Annäherung die Kolben-Zylinder-Anordnung geschützt werden soll, ist dabei vorrangig eine sich beim Ankuppeln annähernde Zugöse. Aus Gründen einer erleichterten Nachrüstung ist die Verkleidungsformation bevorzugt an einem gesondert vom Kupplungskörper ausgebildeten und mit diesem verbundenen Verkleidungsbauteil ausgebildet.

Die Anhängekupplung kann lediglich einen einzigen Bolzenantrieb aufweisen, welcher an einem Längsende der Betätigungswelle mit dieser zur Übertragung von Drehmoment in der oben beschriebenen Weise gekoppelt ist. In diesem Fall ist die bevorzugte Betätigungsvorrichtung dieses Bolzenantriebs eine Bewegung des Kupplungsbolzens von der Aktivstellung in die Inaktivstellung, wie sie beim Abkuppeln einer Zugöse ausgeführt wird. Am entgegengesetzten Längsende der Betätigungswelle kann ein Handbetätigungshebel für eine manuelle Betätigung der Betätigungswelle vorgesehen sein.

Gemäß einer vorteilhaften Weiterbildung kann jedoch der Bolzenantrieb eine weitere Kolben-Zylinder-Anordnung sowie eine gesondert von der Betätigungswelle um eine weitere Antriebsachse rotierbar gelagerte und mit der Betätigungswelle zur gemeinsamen Drehung gekoppelte weitere Antriebswelle aufweisen, wobei die weitere Kolben-Zylinder-Anordnung eine längs ihrer weiteren Kolbenstangenlängsachse aus einem weiteren Zylinder ausfahrbare und in den weiteren Zylinder einziehbare weitere Kolbenstange aufweist. Die Kolben-Zylinder-anordnung ist derart einenends mit einem weiteren kupplungskörperfesten Widerlager gekoppelt sowie andernends mit einer Rotationsantriebsformation der weiteren Antriebswelle gekoppelt, dass eine Ausfahr- oder/und Einzugsbewegung der weiteren Kolbenstange relativ zum weiteren Zylinder eine Rotation der weiteren Antriebswelle um die weitere Antriebsachse und somit eine Drehung der Betätigungswelle um ihre Wellenachse bewirkt. Die Drehung der Betätigungswelle bewirkt wiederum eine Bewegung des Kupplungsbolzens zwischen seinen beiden genannten Stellungen.

Aus Gründen einfacher Herstellung und Montage sind die Kolben-Zylinder-Anordnung und die weitere Kolben-Zylinder-Anordnung bevorzugt baugleich. Bevorzugt ist bzw. sind daher die weitere Kolben-Zylinder-Anordnung oder/und die weitere Antriebswelle gemäß der obigen Beschreibung in gleicher Weise weitergebildet wie die Kolben-Zylinder-Anordnung oder/und die Antriebswelle. Es gilt daher auch für die weitere Kolben-Zylinder-Anordnung und die weitere Antriebswelle die obige Beschreibung mit der Maßgabe, dass die Begriffe "weitere Kolben-Zylinder-Anordnung", "weitere Kolbenstange", "weitere Kolbenstangenlängsachse", "weiterer Zylinder", "weiteres kupplungskörperfestes Widerlager", "weitere Antriebswelle" und "weitere Antriebsachse" an die Stelle des jeweiligen Entsprechenden der in der Beschreibung erwähnten Begriffe "Kolben-Zylinder-Anordnung", Kolbenstange", "Kolbenstangenlängsachse", "Zylinder", "kupplungskörperfestes Widerlager", "Antriebswelle" und "Antriebsachse" treten.

Grundsätzlich kann daran gedacht sein, mit der weiteren Kolben-Zylinder-Anordnung das auf die Betätigungswelle ausübbare Drehmoment betragsmäßig zu erhöhen, sodass nicht ausgeschlossen sein soll, dass die Kolben-Zylinder-Anordnung und die weitere Kolben-Zylinder-Anordnung Drehmoment im gleichen Drehsinn auf die Betätigungswelle ausüben. Ein höherer Funktionsumfang kann jedoch dadurch erreicht werden, dass eine Betätigung der weiteren Kolben-Zylinder-Anordnung die Betätigungswelle in entgegengesetztem Drehsinn zur Drehbewegung antreibt wie eine Betätigung der Kolben-Zylinder-Anordnung. Dann kann die Kolben-Zylinder-Anordnung, wie oben beschrieben, den Kupplungsbolzen zur Bewegung von der Aktivstellung in die Inaktivstellung antreiben. Die weitere Kolben-Zylinder-Anordnung kann den Kupplungsbolzen in die entgegengesetzte Richtung von der Inaktivstellung in die Aktivstellung antreiben, wie es beim Ankuppeln erforderlich ist.

Ebenso können grundsätzlich beliebige Relativbewegungen von Kolbenstange und Zylinder genutzt werden, um die Antriebswelle und somit mittelbar die Betätigungswelle anzutreiben. Besonders im Hinblick auf die besonders bevorzugte Ausführungsform eines Membranzylinders als der Kolben-Zylinder-Anordnung und der weiteren Kolben-Zylinder-Anordnung, bei welcher in der Regel eine Einzugsbewegung der Kolbenstange in den Zylinder durch eine mechanische Feder getrieben erfolgt und nur die Ausfahrbewegung durch ein Druckmedium, bevorzugt pneumatisch, bewirkt ist, treibt bevorzugt eine Ausfahrbewegung der weiteren Kolbenstange relativ zum weiteren Zylinder die Betätigungswelle in entgegengesetztem Drehsinn zur Drehbewegung an wie eine Ausfahrbewegung der Kolbenstange relativ zum Zylinder.

Die zuvor erwähnte kompakte Anordnung der Anhängekupplung kann auch bei Verwendung von zwei Kolben-Zylinder-Anordnungen dadurch erreicht werden, dass die Kolben-Zylinder-Anordnung und die weitere Kolben-Zylinder-Anordnung jeweils neben dem Bolzen-Aufnahmegehäuse angeordnet ist, und zwar auf unterschiedlichen, bevorzugt einander entgegengesetzten Seiten des Bolzen-Aufnahmegehäuses. Weiter bevorzugt ist die weitere Kolben-Zylinder-Anordnung derart angeordnet, dass die weitere Kolbenstangenlängsachse mit einer Parallelen zur Bewegungsachse zwischen der Inaktiv- und der Aktivstellung einen Winkel von nicht mehr als 20° einschließt. Dies bedeutet, dass bezüglich der Kolbenstangenlängsachse der Kolben-Zylinder-Anordnung einerseits und der weiteren Kolben-Zylinder-Anordnung andererseits, die beiden Anordnungen um etwa 90° relativ zueinander, etwa um eine parallele zur Antriebsachse oder zur weiteren Antriebsachse, verdreht am Kupplungskörper angeordnet sind.

Bevorzugt sind die Antriebsachse und die weitere Antriebsachse zueinander, besonders bevorzugt auch zur Wellenachse koaxial.

Um auch die weitere Kolben-Zylinder-Anordnung gegen mechanische Beschädigung beim Ankuppeln zu schützen, kann die Anhängekupplung eine weitere Verkleidungsformation aufweisen, welche die weitere Kolben-Zylinder-Anordnung gegen eine Annäherung eines Bauteils, insbesondere einer Zugöse, in einer Richtung parallel zur Kupplungsachse abschirmt. Zur verbesserten Nachrüstbarkeit ist auch die weitere Verkleidungsformation vorzugsweise an einem gesondert vom Kupplungskörper ausgebildeten und mit diesem verbundenen weiteren Verkleidungsbauteil ausgebildet. Zur vereinfachten Montage sind bevorzugt die Verkleidungsformation und die weitere Verkleidungsformation einstückig miteinander ausgebildet, beispielsweise als ein gemeinsames Blechbauteil.

In an sich bekannter Weise durchsetzt die Betätigungswelle das Bolzen-Aufnahmegehäuse, sodass sie beiderseits des Gehäuses zugänglich ist. Ein Längsende ist mit der Antriebswelle Drehmoment übertragend verbunden. Das entgegengesetzte Längsende kann den oben genannten Handbetätigungshebel aufweisen oder kann mit der weiteren Antriebswelle Drehmoment übertragend verbunden sein. Vorzugsweise verläuft die Wellenachse bauraumsparend sowohl orthogonal zur Kupplungsachse als auch orthogonal zur Bewegungsachse.

Die vorliegende Erfindung wird nachfolgend anhand der beiliegenden Zeichnungen näher erläutert werden. Es stellt dar:
- Fig. 1: eine perspektivische schematische Ansicht einer erfindungsgemäßen Ausführungsform einer Bolzen-Anhängekupplung der vorliegenden Erfindung, bezogen auf die Einbausituation betrachtet von schräg oben und schräg hinten,
- Fig. 2: eine perspektivische schematische Ansicht der Bolzen-Anhängekupplung von Figur 1, bezogen auf die Einbausituation betrachtet von schräg oben und schräg vorne,
- Fig. 3: eine Draufsicht der Bolzen-Anhängekupplung der Figuren 1 und 2,
- Fig. 4: eine teilweise geschnittene Seitenansicht der Bolzen-Anhängekupplung der Figuren 1 bis 3 längs des Pfeils IV der Figuren 1 und 3, mit der weiteren Kolben-Zylinder-Anordnung in einer Betriebsstellung, welche der Aktivstellung des Kupplungsbolzens zugeordnet ist,
- Fig. 5: die teilweise geschnittene Seitenansicht der Bolzen-Anhängekupplung der Figur 5, mit der weiteren Kolben-Zylinder-Anordnung in einer Betriebsstellung, welche der Inaktivstellung des Kupplungsbolzens zugeordnet ist,
- Fig. 6: eine teilweise geschnittene Seitenansicht der Bolzen-Anhängekupplung der Figuren 1 bis 3 längs des Pfeils VI der Figuren 1 und 3, mit der KolbenZylinder-Anordnung in einer Betriebsstellung, welche der Aktivstellung des Kupplungsbolzens zugeordnet ist,
- Fig. 7: die teilweise geschnittene Seitenansicht der Bolzen-Anhängekupplung der Figur 6, mit der weiteren Kolben-Zylinder-Anordnung in einer Betriebsstellung, welche der Inaktivstellung des Kupplungsbolzens zugeordnet ist,
- Fig. 8: eine grobschematische Schnittansicht durch die Kolben-Zylinder-Anordnung längs einer zur Antriebsachse orthogonalen Schnittebene in einer Betriebsstellung, welche zwischen den Stellungen der Figuren 6 und 7 gelegen ist.

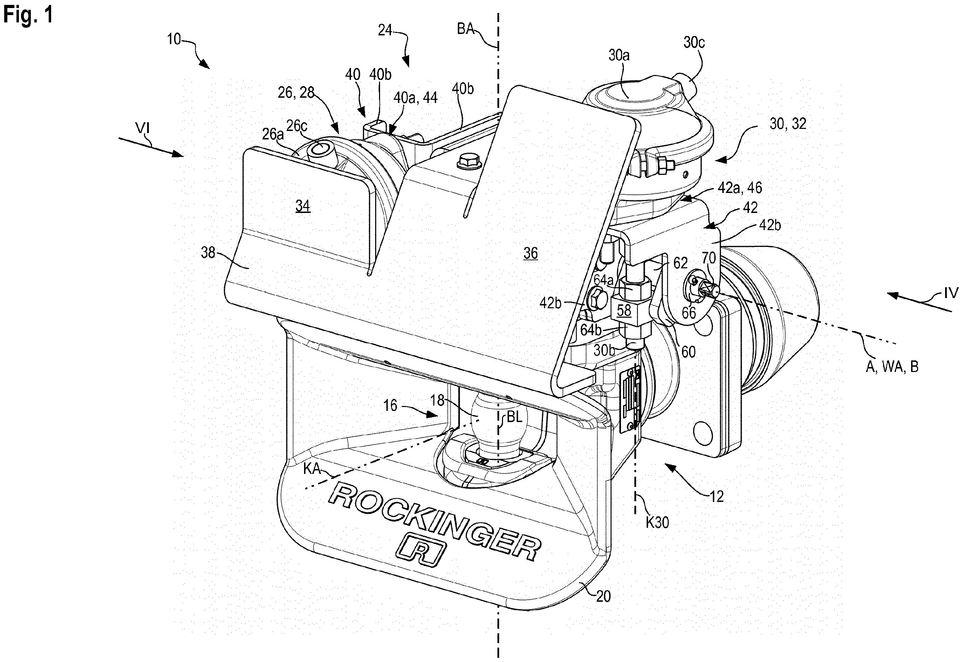

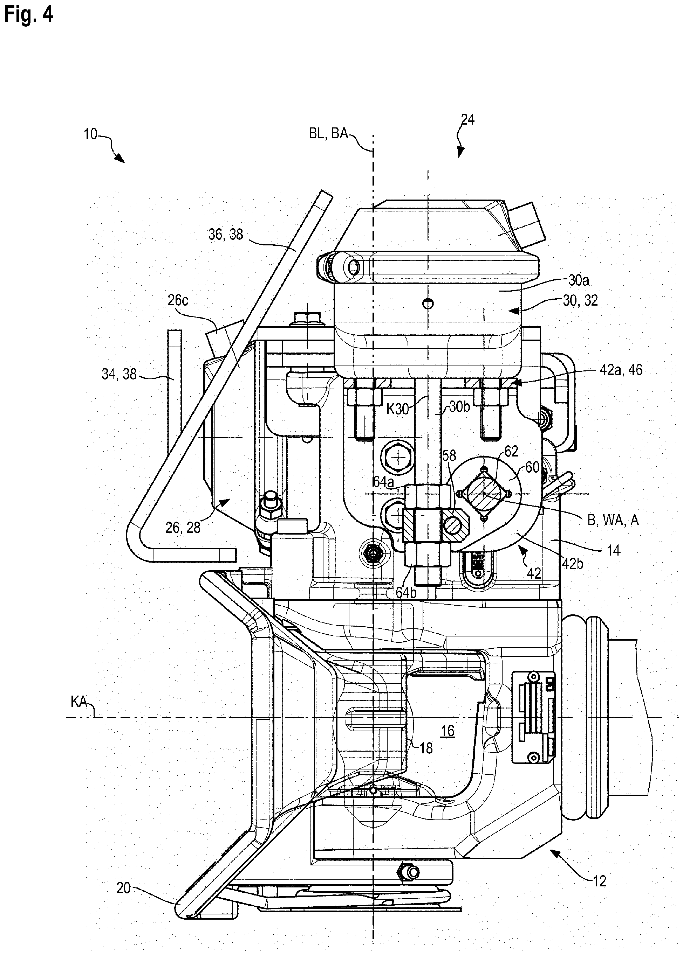

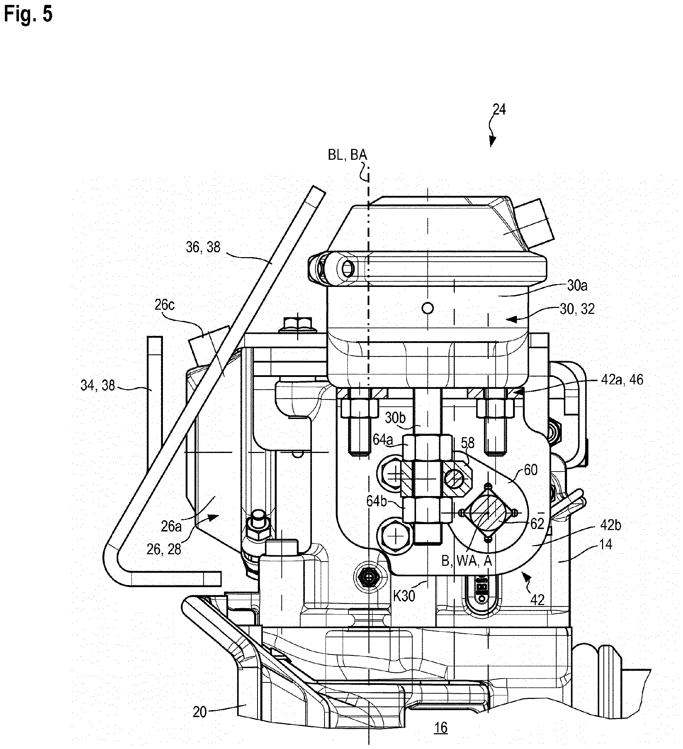

In den Figuren 1 bis 7 ist eine erfindungsgemäße Ausführungsform einer Bolzen-Anhängekupplung der vorliegenden Anmeldung allgemein mit 10 bezeichnet. Die Anhängekupplung umfasst einen Kupplungskörper 12 mit einem in einem - bezogen auf die fertig an ein Fahrzeug montierte Situation der Kupplung 10 - oberen Bereich gelegenen Bolzen-Aufnahmegehäuse 14, welches in der Fachwelt auch als "Automatikgehäuse" bezeichnet wird.

In Figur 1 unter dem Aufnahmegehäuse 14 befindet sich ein Kupplungsmaul 16, welches zusammen mit dem Aufnahmegehäuse 14 als, möglicherweise zusätzlich wenigstens abschnittsweise bearbeitetes, Schmiede- oder Gussbauteil einstückig am Kupplungskörper 12 ausgebildet ist.

In das Kupplungsmaul 16 ragt in Figur 1 ein Kupplungsbolzen 18 ein, der sich längs seiner Bolzenlängsachse BL erstreckt, die kollinear mit einer Bewegungsachse BA ist, längs welcher der Kupplungsbolzen 18 zwischen der in Figur 1 gezeigten Aktivstellung und einer aus dem Kupplungsmaul 16 zurückgezogenen und in das Aufnahmegehäuse 14 eingefahrenen in Aktivstellung bewegbar ist.

Mit "KA" ist eine zur Bewegungsachse BA des Kupplungsbolzens 18 orthogonale Kupplungsachse bezeichnet, längs welcher im Falle ihrer Ankupplung eine Zugöse idealerweise dem Kupplungsmaul 16 angenähert wird. Die Kupplungsachse KA verläuft im fertig an ein Fahrzeug montierten Zustand der Anhängekupplung 10 parallel zur Rollachse des Fahrzeugs. Die Zugöse selbst ist in den Figuren nicht dargestellt. Sie befindet sich im Ankupplungszustand im Kupplungsmaul 16 und ist dann von dem Kupplungsbolzen 18 in der Aktivstellung durchsetzt.

Vom Kupplungsmaul 16 zu unterscheiden ist das Fangmaul 20, welches als Einführtrichter einer sich an das Kupplungsmaul 16 annähernden Zugöse dient, wenn diese - wie es meist der Fall sein wird - sich nicht exakt längs der Kupplungsachse KA an das Kupplungsmaul 16 annähert.

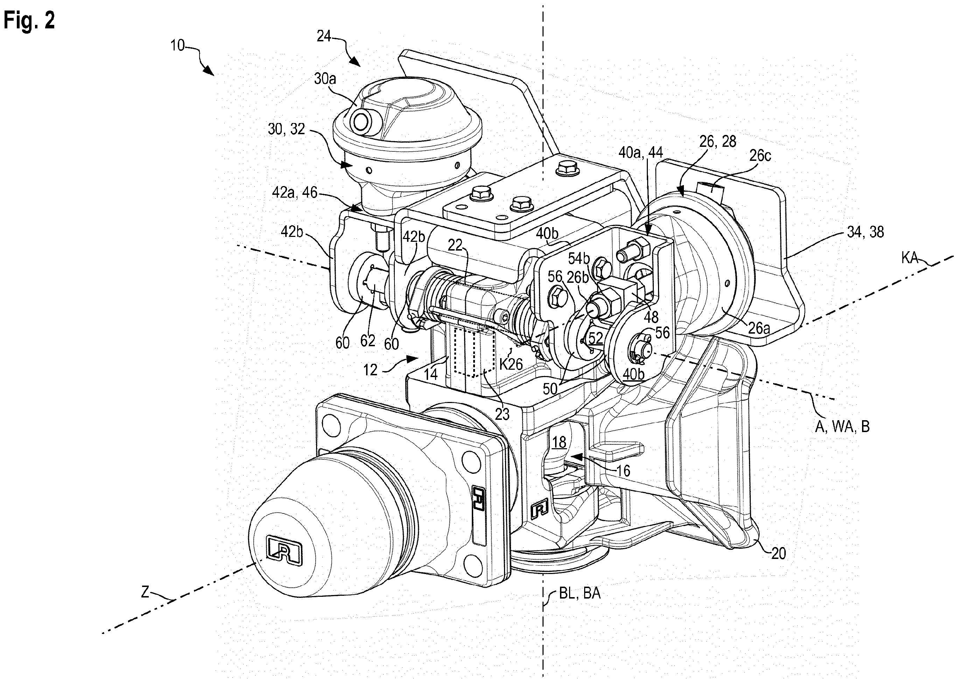

In Figur 2 ist lediglich strichliniert eine Betätigungswelle 22 angedeutet, welche das Aufnahmegehäuse 14 orthogonal sowohl zur Bewegungsachse BA wie auch zur Kupplungsachse KA durchsetzt und beiderseits aus dem Aufnahmegehäuse 14 herausragt. Die Betätigungswelle 22 ist um eine Wellenachse WA in entgegengesetzten Drehsinnen drehbar. Eine Drehung der Betätigungswelle 22 um die Wellenachse in einem Drehsinn bewirkt eine Bewegung des Kupplungsbolzens 18 von der Aktivstellung in die Inaktivstellung. Eine Drehung der Betätigungswelle 22 im entgegengesetzten Drehsinn bewirkt eine Bewegung des Kupplungsbolzens 18 von der Inaktivstellung in die Aktivstellung. Hierzu ist die Betätigungswelle 22 im Aufnahmegehäuse 14 in an sich bekannter Weise über eine lediglich grobschematisch in Fig. 2 angedeutete Vermittlungseinrichtung 23, wie etwa ein Getriebe oder/und ein Gestänge oder/und eine mechanische Kulissensteuervorrichtung mit dem Kupplungsbolzen 18 gekoppelt.

Zur Fernbetätigung der Anhängekupplung 10 weist diese einen Bolzenantrieb 24 auf.

Der Bolzenantrieb 24 umfasst eine Kolben-Zylinder-Anordnung 26 in bevorzugter Gestalt eines Membranzylinders 28. Der Bolzenantrieb 24 umfasst außerdem eine weitere Kolben-Zylinder-Anordnung 30, ebenfalls in bevorzugter Gestalt eines Membranzylinders 32.

Eine Verkleidungsformation 34 schützt die Kolben-Zylinder-Anordnung 26. Eine weitere Verkleidungsformation 36 schützt die weitere Kolben-Zylinder-Anordnung 30. Die beiden Verkleidungsformationen 34 und 36 sind an einem einstückigen Verkleidungsbauteil 38 ausgebildet, welches gesondert vom Kupplungskörper 12 ausgebildet und an diesen lösbar montiert ist. Im dargestellten Ausführungsbeispiel ist das Verkleidungsbauteil 38 mit der Oberseite des Aufnahmegehäuses 14 verschraubt.

"Lösbar montiert" bedeutet dabei, dass die Verbindung ohne Zerstörung eines Bauteils lösbar ist.

Die beiden Kolben-Zylinder-Anordnungen 26 und 30 sind beiderseits des Aufnahmegehäuses 14 angeordnet, und zwar bezüglich einer sowohl zur Bewegungsachse BA als auch zur Kupplungsachse KA orthogonalen Richtung auf entgegengesetzten Seiten des Aufnahmegehäuses 14.

Jede der Kolben-Zylinder-Anordnungen 26 und 30 ist über ein eigenes, grob U-förmiges Lagerbauteil 40 bzw. 42 mit dem Kupplungskörper 12 verbunden. Die jeweiligen Basen 40a bzw. 42a der Lagerbauteile 40 bzw. 42 bilden dabei ein kupplungskörperfestes Widerlager 44 (für den Zylinder 26a der Kolben-Zylinder-Anordnung 26) sowie ein weiteres kupplungskörperfestes Widerlager 46 (für den Zylinder 30a der Kolben-Zylinder-Anordnung 30). Der Zylinder 26a und der weiteren Zylinder 30a sind beispielsweise mit der jeweiligen Basis 40a bzw. 42a der Lagerbauteil 40 bzw. 42 verschraubt.

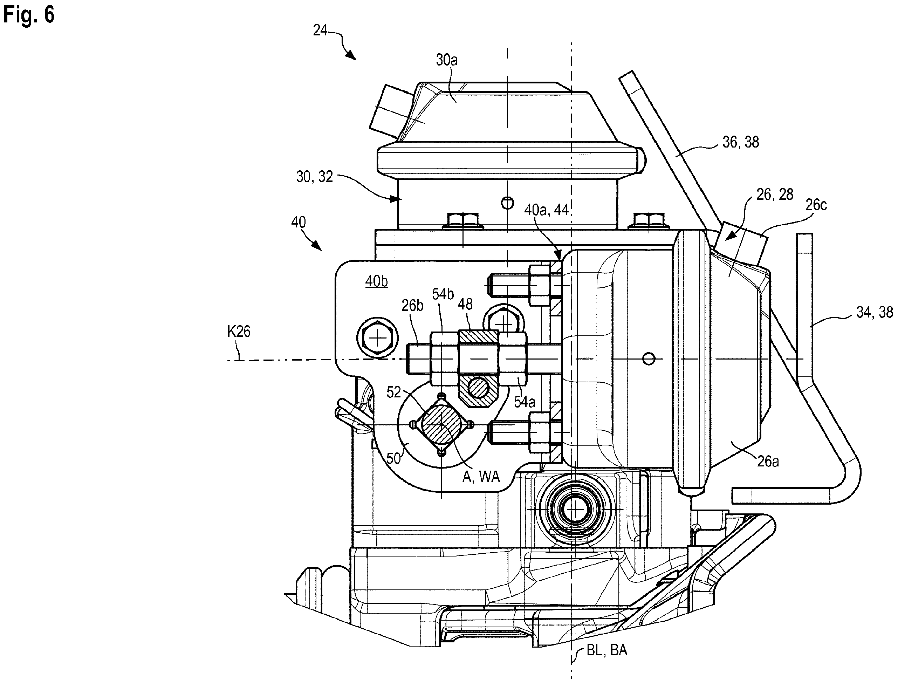

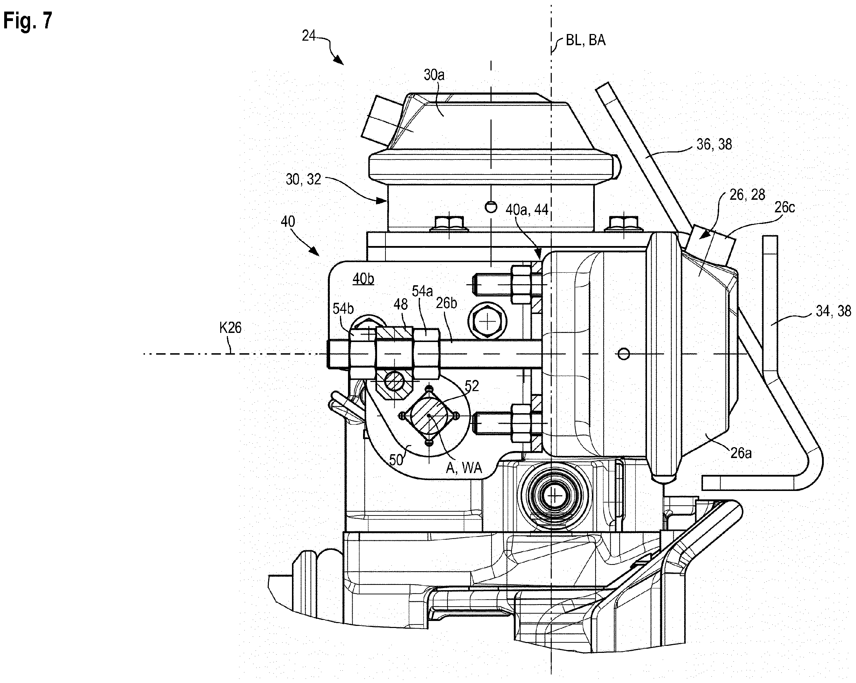

Nachfolgend wird zunächst an den Figuren 6 und 7 die Funktion der Kolben-Zylinder-Anordnung 26 erläutert:
Aus dem Zylinder 26a des Membranzylinders 28 ragt eine Kolbenstange 26b heraus, welche sich längs ihrer Kolbenstangenlängsachse K26 erstreckt. Die Kolbenstange 26b ist über ein Zwischenstück 48 mit einer Rotationsantriebsformation 50 in Gestalt einer Exzenter-Scheibe einer Antriebswelle 52 verbunden. Durch ein Ausfahren der Kolbenstange 26b aus dem Zylinder 26a wird die Antriebswelle 52 soweit um ihre Antriebsachse A gedreht, dass über die zur Antriebswelle 52 koaxiale Betätigungswelle 22, mit welcher die Antriebswelle 52 Drehmoment übertragend verbunden ist, der Kupplungsbolzen 18 von der Aktiv- in die Inaktivstellung bewegt wird.

Das Zwischenstück 48 ist relativ zur Rotationsantriebsformation 50 um eine zur Antriebsachse A parallele Achse drehbar. Die Kolbenstange 26b weist im dargestellten Beispiel ein Außengewinde auf, auf welches zwei Muttern 54a und 54b aufgeschraubt sind, um das Zwischenstück 48 grundsätzlich justierbar, aber im fertig montierten Zustand axial unverlagerbar mit der Kolbenstange 26b zu verbinden.

Wie in Figur 2 gezeigt ist, können an der Antriebswelle 52 zwei axial mit Abstand voneinander angeordnete Rotationsantriebsformationen 50, und zwar axial beiderseits des Zwischenstücks 48, zur Übertragung von Drehmoment vom Zwischenstück 48 zur Antriebswelle 52 vorgesehen sein.

In den parallelen Schenkeln 40b des grob U-förmigen Lagerbauteils 40, welche durch die Basis 40a einstückig miteinander verbunden sind, sind jeweils Rotationslagerbuchsen 56 vorgesehen, welche gemeinsam die Antriebswelle 52 zur Rotation um die Antriebsachse A am Lagerbauteil 40 lagern.

Durch die Lagerung der Antriebswelle 52 zur Rotation an den beiden Schenkeln 40b des Lagerbauteils 40 und durch die koaxiale Anordnung der Antriebswelle 52 zur Betätigungswelle 22 kann von der Antriebswelle 52, obwohl diese exzentrisch durch die Kolben-Zylinder-Anordnung 26 mit Kraft beaufschlagt wird, keine Querkraft orthogonal zur Antriebsachse A bzw. zur Wellenachse WA auf die Betätigungswelle 22 übertragen werden.

Durch die symmetrische Anordnung von Exzenter-Scheiben 50 (Rotationsantriebsformationen), mit welchen Drehmoment von der Kolbenstange 26b auf die Antriebswelle 52 übertragen wird, wirkt zwar eine Querkraft auf die exzentrisch kraftbeaufschlagte Antriebswelle 52, jedoch wirkt kein Moment um eine zur Antriebsachse A orthogonale Momentenachse. Somit kann die durch die Kraftkopplung der Antriebswelle 52 mit der Kolben-Zylinder-Anordnung 26 bewirkte mechanische Belastung der Antriebswelle 52 gering gehalten werden, was es zusätzlich erleichtert, eine radiale Belastung de Betätigungswelle 22 durch die Antriebswelle 52 zu vermeiden und die Betätigungswelle 22 ausschließlich mit einem um die Wellenachse WA wirkenden Drehmoment zu belasten. Genau hierfür ist die Betätigungswelle 22 ausgelegt, sodass die anhand der Figuren 6 und 7 beschriebene Fernbetätigung der Anhängekupplung 10 zum Lösen einer Kupplung zu keinerlei Lebensdauernachteil für die Betätigungswelle 22 führt. Dies gilt selbst dann, wenn die Anhängekupplung mit einer Fernbetätigung nachgerüstet wurde.

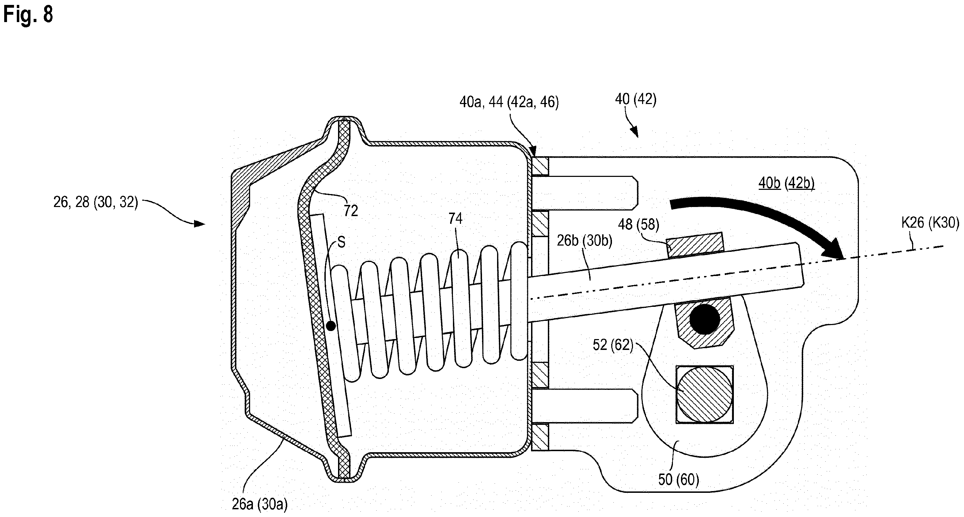

Der Zylinder 26a ist ein einfach wirkender pneumatischer Zylinder, dem über einen Anschluss 26c Druckluft zugeführt werden kann. Wie weiter unten im Zusammenhang mit Figur 8 erläutert werden wird, kann die Kolbenstange 26b aus dem Zylinder 26a gegen die Spannkraft einer Rückholfeder 74 ausgefahren werden. Wird der Zylinder 26a durch eine entsprechende Steuereinrichtung pneumatisch drucklos gestellt und wirken auf diesen auch sonst keine äußeren Kräfte, stellt die Rückholfeder 74 die Kolbenstange 26b in eine in den Zylinder 26a eingezogene Stellung zurück.

Die weitere Kolben-Zylinder-Anordnung 30 ist mit der Kolben-Zylinder-Anordnung 26 baugleich, sodass die oben für die Anordnung 26 gegebene Beschreibung mutatis mutandis auch für die Anordnung 30 gilt. Es reicht daher aus, die Kolben-Zylinder-Anordnung 30, deren Zylinder 30a über einen Anschluss 30c mit Druckluft versorgt werden kann, insoweit zu beschreiben, als sie sich von der oben bereits beschriebenen Kolben-Zylinder-Anordnung 26 unterscheidet.

Die weitere Kolben-Zylinder-Anordnung 30 weist ebenfalls eine (weitere) Kolbenstange 30b auf, welche sich längs einer Kolbenstangenlängsachse K30 erstreckt und welche bei Versorgung des weiteren Zylinders 30a mit Druckluft gegen die Spannkraft einer Rückholfeder aus dem weiteren Zylinder 30a ausgefahren werden kann.

Optional können bei der dargestellten Verwendung von bezüglich der Betätigungswelle 22 gegensinnig wirkenden Kolben-Zylinder-Anordnungen 26 und 30 Rückholfedern an den beiden Kolben-Zylinder-Anordnungen 26 und 30 weggelassen werden, da die Betätigung einer Kolben-Zylinder-Anordnung 26 oder 30 die jeweils andere Kolben-Zylinder-Anordnung 30 bzw. 26 zurückstellt.

Die weitere Kolben-Zylinder-Anordnung 30 ist bezüglich der relativen Orientierung ihrer weiteren Kolbenstangenlängsachse K30 relativ zur Wellenachse WA um etwa 90° um die Wellenachse WA bezüglich der Kolben-Zylinder-Anordnung 26 verdreht am Aufnahmegehäuse 14 angeordnet. Während also die Kolbenstangenlängsachse K26 der Kolbenstange 26b bezüglich einer Parallelen zur Kupplungsachse KA im Wesentlichen parallel oder zumindest unter Einschluss eines Winkels von nicht mehr als 20° angeordnet ist und die Kolbenstange 26b somit vorrangig längs einer Parallelen zur Kupplungsachse KA aus dem Zylinder 26a ausgefahren und in diesen eingezogen wird, ist die weitere Kolbenstange 30b derart angeordnet, dass ihre Kolbenstangenlängsachse K30 bezüglich einer Parallelen zur Bewegungsachse BA im Wesentlichen parallel oder zumindest unter Einschluss eines Winkels von nicht mehr als 20° orientiert ist. Folglich wird die weitere Kolbenstange 30 vorrangig längs einer Parallelen zur Bewegungsachse BA aus dem Zylinder 30a ausgefahren und in diesen eingezogen.

Weiterhin ist die weitere Kolbenstange 30b bezüglich der Wellenachse WA derart angeordnet, dass die Betätigungswelle 22 dann, wenn die weitere Kolbenstange 30b aus dem weiteren Zylinder 30a ausgefahren wird, im entgegengesetzten Drehsinn um die Wellenachse WA drehbetätigt wird wie wenn die Kolbenstange 26b aus dem Zylinder 26a ausgefahren wird. Somit kann die Betätigungswelle 22, verglichen mit der Anordnung 26, durch die weitere Kolben-Zylinder-Anordnung 30 im entgegengesetzten Betätigungssinn betätigt werden, sodass durch die weitere Fernbetätigung der Kupplungsbolzen 18 auch fernbetätigt von der Inaktiv- in die Aktivstellung bewegt werden kann. Überdies kann der Zylinder 30a dann, wenn der Kupplungsbolzen 18 durch die weitere Kolben-Zylinder-Anordnung 30 in die Aktivstellung bewegt wurde, weiter mit Druckluft beaufschlagt bleiben, sodass der Kupplungsbolzen 18 durch die von der weiteren Anordnung 30 ausgeübte Kraft in die Aktivstellung vorbelastet ist und bleibt. Die weitere Kolben-Zylinder-Anordnung 30 ist daher nicht nur eine Betätigungsvorrichtung, sondern auch eine Sicherheitseinrichtung, welche dann, wenn eine Zugöse an die Anhängekupplung 10 angekoppelt ist, den Kupplungsbolzen 18 gegen ein unerwünschtes Öffnen der Kupplung sichert.

Um die Betätigungswelle 22 auch auf Seiten der weiteren Kolben-Zylinder-Anordnung 30 querkraftfrei mit einem Betätigung-Drehmoment um die Wellenachse WA belasten zu können, ist die weitere Kolbenstange 30b in analoger Weise wie die Kolbenstange 26b über eine weitere Rotationsantriebsformation 60, genauer über zwei mit axialem Abstand voneinander angeordnete Rotationsantriebsformationen 60, mit einer weiteren Antriebswelle 52 gekoppelt, die um eine weitere Antriebsachse B rotierbar ist. Auch die weitere Antriebsachse B ist kollinear mit der Wellenachse WA und damit auch mit der Antriebsachse A.

Die weitere Antriebswelle 62 ist über Rotationslagerbuchsen 66 in den seitlichen Schenkeln 42b des weiteren Lagerbauteils 42 mit bezüglich der Antriebsachse B axialem Abstand voneinander zur Rotation um die Antriebsachse B gelagert. Auch das weitere Lagerbauteil 42 ist wie das Lagerbauteil 40 grob U-förmig. Die beiden seitlichen Schenkel 42b sind durch die das weitere kupplungskörperfeste Widerlager 46 des Zylinders 30a bildende Basis 42a einstückig miteinander verbunden.

Die als mit den Exzenter-Scheiben 50 identisch ausgebildeten Exzenter-Scheiben 60 als die weiteren Rotationsantriebsformationen 60 sind wiederum durch ein weiteres Zwischenstück 58 mit der weiteren Kolbenstange 30b zur gemeinsamen Bewegung gekoppelt. Auch die weitere Kolbenstange 30b weist auf ihrer Außenseite ein Außengewinde auf, auf welches zwei Muttern 64a und 64b aufgeschraubt sind, um das weitere Zwischenstück 58 axial definiert zwischen sich zu halten.

Aufgrund des prinzipiell gleichen Aufbaus wird auch die weitere Antriebswelle 62 durch die weitere Kolbenstange 30b mit einer Querkraft, aber ohne ein um eine Momentenachse orthogonal zur weiteren Antriebsachse B wirkendes Drehmoment belastet. Aufgrund des durch die weiteren Rotationsantriebsformationen 60 gebildeten Lastarms wirkt die von der weiteren Kolbenstange 30b ausgeübte Kraft längs der weiteren Kolbenstange K30 als Drehmoment um die weitere Antriebsachse B. Die auf die weitere Antriebswelle 62 wirkende Querkraft kann durch die Rotationslagerbuchsen 66 in den beiden Schenkeln 42b aufgenommen werden, sodass die mit der Betätigungswelle 22 Drehmoment übertragend verbundene weitere Antriebswelle 62 keine Querkraft auf die Betätigungswelle 62 übertragen oder ausüben kann.

Somit ist auch die Betätigung der Betätigungswelle 22 durch die weitere Kolben-Zylinder-Anordnung 30 querkraftfrei.

Alternativ zur Anordnung der weiteren Kolben-Zylinder-Anordnung 30 kann auf dieser Seite des Aufnahmegehäuses 14 ein Handbetätigungshebel an der Betätigungswelle 22 vorgesehen sein, etwa als gesonderter Handbetätigungshebel oder als einstückig mit der Betätigungswelle 22 ausgebildetes Hebelende.

Als Möglichkeit einer Notbetätigung ist an dem Längsende der Antriebswelle 62, welches den dem Aufnahmegehäuse 14 ferner gelegenen Schenkel 42b durchsetzt, eine Polyeder-Kontur 70 ausgebildet, beispielsweise ein Vierkant- oder SechskantProfil, auf welches ein mit einem entsprechenden Gegenprofil ausgebildeter Handbetätigungshebel zur Übertragung von Drehmoment um die weitere Antriebsachse B aufsteckbar ist. Alternativ oder zusätzlich kann eine entsprechende Polyeder-Kontur auch am entgegengesetzten Längsende der Antriebswelle 52 auf Seiten der Kolben-Zylinder-Anordnung 26 ausgebildet sein. In der Regel reicht jedoch ein zur Drehmoment übertragenden Kopplung mit einem Handbetätigungshebel ausgebildetes Längsende als Möglichkeit der Notbetätigung aus.

Figur 8, welche sowohl für die Kolben-Zylinder-Anordnung 26, wie auch mutatis mutandis für die weitere Kolben-Zylinder-Anordnung 30 gilt, zeigt, wie die Kolbenstange 26b an einer Membran 72 im Zylinder 26a festgelegt ist und aufgrund der mangelnden Formstabilität der Membran 72 zumindest innerhalb eines vorbestimmten Winkelbereichs um eine zur Kolbenstangenlängsachse K26 orthogonale Schwenkachse S schwenkbar ist. Dadurch kann der Zylinder 26a starr mit dem Kupplungskörper 12 verbunden sein. Die bei der Betätigung der Antriebswelle 52 notwendige Ausgleichsbewegung, da der mit dem Zwischenstück 48 gekoppelte Abschnitt der Kolbenstange 26b aufgrund der Zwangsführung durch die Rotationsantriebsformationen 50 eine Kreisbewegung um die Antriebsachse A ausführt, wird in einfacher aber sicherer Weise durch die Membran 72 geleistet.

Eine Rückholfeder 74 holt die Kolbenstange 26b bei drucklosem Zylinder 26a wieder in die in den Zylinder 26a eingezogene Stellung zurück, sofern keine von außen auf die Antriebswelle 52 oder/und auf die Kolbenstange 26b angreifenden und einwirkenden Kräfte und Momente dieser Rückholbewegung entgegenstehen.

Die Fig. 8 beschreibt prinzipiell auch die Struktur der Kopplung der weiteren Kolben-Zylinder-Anordnung 30 mit der weiteren Antriebswelle 62, wenngleich tatsächlich die Kolbenstangen 26b und 30b auf unterschiedlichen Seiten der zugeordneten koaxialen Antriebsachsen A und B gelegen sind.

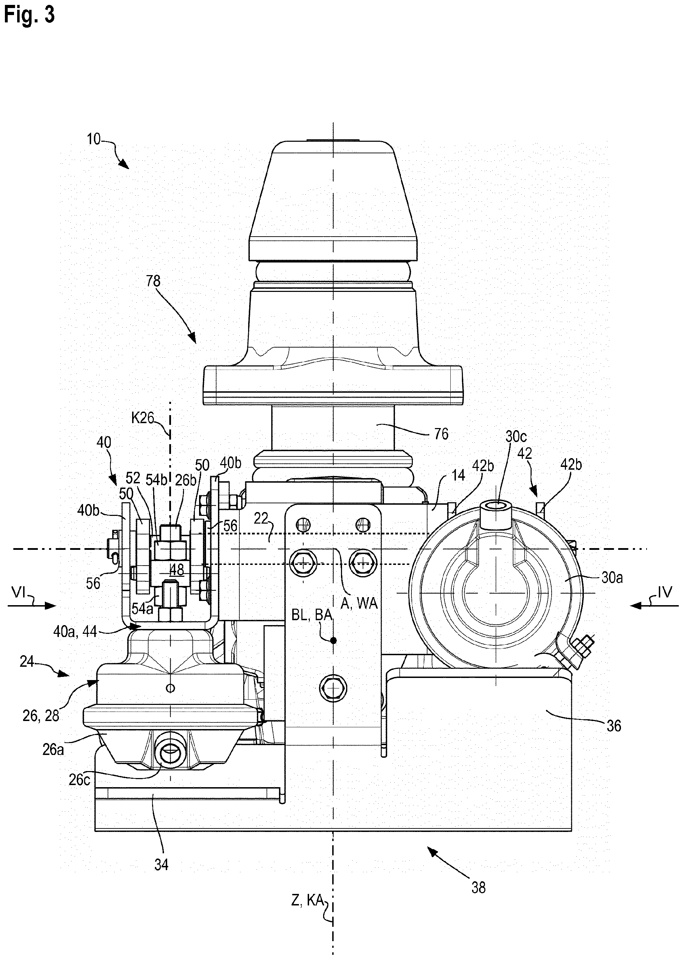

Lediglich der Vollständigkeit halber sei auf die in den Figuren 2 und 3 dargestellte Lagerstruktur 78 mit einer Zugstange 76 hingewiesen, mit welcher die Anhängekupplung 10 in an sich bekannter Weise an einem Fahrzeug sicher anbringbar ist. Die Zugstange 76 erstreckt sich längs einer Zugstangenlängsachse Z, welche parallel zur Kupplungsachse KA verläuft, jedoch längs der Bewegungsachse BA zur Kupplungsachse KA versetzt ist.

## Patentansprüche

1. Fernbetätigbare Bolzen-Anhängekupplung (10) mit einem Kupplungskörper (12), umfassend ein Bolzen-Aufnahmegehäuse (14) und ein dem Bolzen-Aufnahmegehäuse (14) benachbartes Kupplungsmaul (16), in welches eine Zugöse bestimmungsgemäß längs einer Kupplungsachse (KA) einführbar ist, wobei ein Kupplungsbolzen (18) längs einer Bewegungsachse (BA) zwischen einer stärker aus dem Kupplungsmaul (16) ausgerückten sowie stärker in das Bolzen-Aufnahmegehäuse (14) eingerückten Inaktivstellung und einer stärker in das Kupplungsmaul (16) eingerückten sowie stärker aus dem Bolzen-Aufnahmegehäuse (14) ausgerückten Aktivstellung bewegbar ist, wobei die Bolzen-Anhängekupplung (10) eine um eine Wellenachse (WA) drehbare Betätigungswelle (22) umfasst, welche derart durch eine Kraft- und Bewegung übertragende Vermittlungseinrichtung (23) mit dem Kupplungsbolzen (18) gekoppelt ist, dass eine Betätigung der Betätigungswelle (22) in wenigstens einem Drehsinn eine Bewegung des Kupplungsbolzens (18) zwischen seiner Inaktivstellung und seiner Aktivstellung in wenigstens einer Richtung bewirkt, wobei die Bolzen-Anhängekupplung (10) einen Bolzenantrieb (24) mit einer Kolben-Zylinder-Anordnung (26, 30) umfasst, welche eine längs ihrer Kolbenstangenlängsachse (K26, K30) aus einem Zylinder (26a, 30a) ausfahrbare Kolbenstange (26b, 30b) aufweist, wobei die Kolben-Zylinder-Anordnung (26, 30) derart einenends mit einem kupplungskörperfesten Widerlager (44, 46) gekoppelt und andernends mit der Betätigungswelle (22) verbunden ist, dass durch eine Ausfahr- oder/und Einzugsbewegung der Kolbenstange (26b, 30b) relativ zum Zylinder (26a, 30a) die Betätigungswelle (22) zur Bewegung des Kupplungsbolzens (18) zwischen der Inaktivstellung und der Aktivstellung in wenigstens einer Drehrichtung um die Wellenachse (WA) drehbetätigbar ist, wobei der Bolzenantrieb (24) weiter eine gesondert von der Betätigungswelle (22) um eine Antriebsachse (A, B) rotierbar gelagerte und mit der Betätigungswelle (22) zur gemeinsamen Drehung gekoppelte Antriebswelle (52, 62) umfasst, wobei die Kolben-Zylinder-Anordnung (26, 30) andernends mit einer Rotationsantriebsformation (50, 60) der Antriebswelle (52, 62) gekoppelt ist, so dass eine Ausfahr- oder/und Einzugsbewegung der Kolbenstange (26b, 30b) relativ zum Zylinder (26a, 30a) eine Rotation der Antriebswelle (52, 62) um ihre Antriebsachse (A, B) und somit eine Drehung der Betätigungswelle (22) um ihre Wellenachse (WA) bewirkt,
**dadurch gekennzeichnet, dass** die Kolbenstange (26b, 30b) auch in den Zylinder (26a, 30a) einziehbar ist und zumindest während einer Ausfahr- oder/und Einzugsbewegung um eine mit der Kolbenstangenlängsachse (K26, K30) einen Winkel einschließende Schwenkachse (S) schwenkbar ist.

2. Fernbetätigbare Bolzen-Anhängekupplung (10) nach Anspruch 1,
**dadurch gekennzeichnet, dass** die Antriebsachse (A, B) und die Wellenachse (WA) koaxial sind.

3. Fernbetätigbare Bolzen-Anhängekupplung (10) nach einem der vorhergehenden Ansprüche,
**dadurch gekennzeichnet, dass** der Zylinder (26a, 30a) mit dem kupplungskörperfesten Widerlager (44, 46) verbunden ist.

4. Fernbetätigbare Bolzen-Anhängekupplung (10) nach einem der vorhergehenden Ansprüche,
**dadurch gekennzeichnet, dass** sie eine Lagerformation umfasst, welche das Widerlager (44, 46) und zwei bezogen auf die Antriebsachse (A, B) mit axialem Abstand voneinander angeordnete, kupplungskörperfeste Wellenlagerabschnitte mit je einem Rotationslager (56, 66) der Antriebswelle (52, 62) aufweist.

5. Fernbetätigbare Bolzen-Anhängekupplung (10) nach Anspruch 4,
**dadurch gekennzeichnet, dass** die Lagerformation ein gesondert vom Kupplungskörper (12) ausgebildetes und mit diesem verbundenes Lagerbauteil (40, 42) ist, vorzugsweise ein U-förmiges Lagerbauteil (40, 42), dessen mit Abstand voneinander angeordnete Schenkel (40b, 42b) die Wellenlagerabschnitte bilden und dessen die Schenkel (40b, 42b) verbindende Basis (40a, 42a) das Widerlager (44, 46) bildet.

6. Fernbetätigbare Bolzen-Anhängekupplung (10) nach einem der vorhergehenden Ansprüche,
**dadurch gekennzeichnet, dass** die Kolben-Zylinder-Anordnung (26, 30) einen Membranzylinder (38, 32) umfasst.

7. Fernbetätigbare Bolzen-Anhängekupplung (10) nach einem der vorhergehenden Ansprüche,
**dadurch gekennzeichnet, dass** die Kolben-Zylinder-Anordnung (26, 30) neben dem Bolzen-Aufnahmegehäuse (14) angeordnet ist, bevorzugt derart, dass die Kolbenstangenlängsachse (K26, K30) mit einer Parallelen zur Kupplungsachse (KA) einen Winkel von nicht mehr als 20° einschließt.

8. Fernbetätigbare Bolzen-Anhängekupplung (10) nach einem der vorhergehenden Ansprüche,
**dadurch gekennzeichnet, dass** sie eine Verkleidungsformation (34, 36), vorzugsweise ein gesondert vom Kupplungskörper (12) ausgebildetes und mit diesem verbundenes Verkleidungsbauteil (38) aufweist, welches die Kolben-Zylinder-Anordnung (26, 30) gegen eine Annäherung eines Bauteils in einer Richtung parallel zur Kupplungsachse (KA) abschirmt.

9. Fernbetätigbare Bolzen-Anhängekupplung (10) nach einem der vorhergehenden Ansprüche,
**dadurch gekennzeichnet, dass** der Bolzenantrieb (24) eine weitere Kolben-Zylinder-Anordnung (30) sowie eine gesondert von der Betätigungswelle (22) um eine weitere Antriebsachse (B) rotierbar gelagerte und mit der Betätigungswelle (22) zur gemeinsamen Drehung gekoppelte weitere Antriebswelle (62) aufweist, wobei die weitere Kolben-Zylinder-Anordnung (30) eine längs ihrer weiteren Kolbenstangenlängsachse (K30) aus einem weiteren Zylinder (30a) ausfahrbare und in den weiteren Zylinder (30a) einziehbare weitere Kolbenstange (30b) aufweist und derart einenends mit einem weiteren kupplungskörperfesten Widerlager (46) gekoppelt sowie andernends mit einer Rotationsantriebsformation (60) der weiteren Antriebswelle (62) gekoppelt ist, dass eine Ausfahr- oder/und Einzugsbewegung der weiteren Kolbenstange (30b) relativ zum weiteren Zylinder (30a) eine Rotation der weiteren Antriebswelle (62) um die weitere Antriebsachse (B) und somit eine Drehung der Betätigungswelle (22) um ihre Wellenachse (WA) bewirkt, wobei bevorzugt die weitere Kolben-Zylinder-Anordnung (30) oder/und die weitere Antriebswelle (62) gemäß einem oder mehreren der Ansprüche 2 bis 9 mit der Maßgabe weitergebildet ist, dass die Begriffe "weitere Kolben-Zylinder-Anordnung", "weitere Kolbenstange", "weitere Kolbenstangenlängsachse", "weiterer Zylinder", "weiteres kupplungskörperfestes Widerlager", "weitere Antriebswelle" und "weitere Antriebsachse" an die Stelle des jeweiligen Entsprechenden der in den Ansprüchen 2 bis 9 erwähnten Begriffe "Kolben-Zylinder-Anordnung", Kolbenstange", "Kolbenstangenlängsachse", "Zylinder", "kupplungskörperfestes Widerlager", "Antriebswelle" und "Antriebsachse" treten.

10. Fernbetätigbare Bolzen-Anhängekupplung (10) nach Anspruch 9,
**dadurch gekennzeichnet, dass** eine Betätigung der weiteren Kolben-Zylinder-Anordnung (30) die Betätigungswelle (22) in entgegengesetztem Drehsinn zur Drehbewegung antreibt wie eine Betätigung der Kolben-Zylinder-Anordnung (26), wobei bevorzugt eine Ausfahrbewegung der weiteren Kolbenstange (30b) relativ zum weiteren Zylinder (30a) die Betätigungswelle (22) in entgegengesetztem Drehsinn zur Drehbewegung antreibt wie eine Ausfahrbewegung der Kolbenstange (26b) relativ zum Zylinder (26).

11. Fernbetätigbare Bolzen-Anhängekupplung (10) nach Anspruch 9 oder 10, unter Einbeziehung des Anspruchs 7,
**dadurch gekennzeichnet, dass** die Kolben-Zylinder-Anordnung (26) und die weitere Kolben-Zylinder-Anordnung (30) jeweils neben dem Bolzen-Aufnahmegehäuse (14) angeordnet ist, und zwar auf unterschiedlichen, bevorzugt entgegengesetzten, Seiten des Bolzen-Aufnahmegehäuses (14), wobei bevorzugt die weitere Kolben-Zylinder-Anordnung (30) derart angeordnet ist, dass die weitere Kolbenstangenlängsachse (K30) mit einer Parallelen zur Bewegungsachse (BA) zwischen der Inaktiv- und der Aktivstellung einen Winkel von nicht mehr als 20° einschließt.

12. Fernbetätigbare Bolzen-Anhängekupplung (10) nach einem der Ansprüche 9 bis 11, unter Einbeziehung des Anspruchs 8,
**dadurch gekennzeichnet, dass** sie eine weitere Verkleidungsformation (36), vorzugsweise ein gesondert vom Kupplungskörper (12) ausgebildetes und mit diesem verbundenes weiteres Verkleidungsbauteil aufweist, welches die weitere Kolben-Zylinder-Anordnung (30) gegen eine Annäherung eines Bauteils in einer Richtung parallel zur Kupplungsachse (KA) abschirmt, wobei bevorzugt die Verkleidungsformation (34) und die weitere Verkleidungsformation (36) einstückig miteinander ausgebildet sind.

13. Fernbetätigbare Bolzen-Anhängekupplung (10) nach einem der vorhergehenden Ansprüche,
**dadurch gekennzeichnet, dass** die Betätigungswelle (22) das Bolzen-Aufnahmegehäuse (14) durchsetzt, vorzugsweise sowohl orthogonal zur Kupplungsachse (KA) als auch orthogonal zur Bewegungsachse (BA).

## Claims

1. Remotely actuatable bolt trailer coupling (10) having a coupling body (12), comprising a bolt housing (14) and a coupling jaw (16) adjacent to the bolt housing (14), into which a towing eye can be introduced for the designated use along a coupling axis (KA), wherein a coupling bolt (18) can be moved along a motion axis (BA) between an inactive position more retracted from the coupling jaw (16) and more introduced into the bolt housing (14) and an active position more introduced into the coupling jaw (16) and more retracted from the bolt housing (14), wherein the bolt trailer coupling (10) comprises an actuating shaft (22) rotatable around a shaft axis (WA), which is coupled to the coupling bolt (18) by way of a transmission device (23) transferring force and motion in such a way that actuating the actuating shaft (22) in at least one rotating direction causes the coupling bolt (18) to move between its inactive position and its active position in at least one direction, wherein the bolt trailer coupling (10) comprises a bolt drive (24) with a piston-cylinder arrangement (26, 30) featuring a piston rod (26b, 30b) extensible along its longitudinal piston rod axis (K26, K30) from a cylinder (26a, 30a), wherein the piston-cylinder arrangement (26, 30) is coupled to an thrust bearing (44, 46) affixed to the coupling body on one end and connected to the actuating shaft (22) on the other end, in such a way that an extension and/or retraction motion of the piston rod (26b, 30b) relative to the cylinder (26a, 30a) enables the rotating actuation of the actuating shaft (22) relative to the motion of the coupling bolt (18) between the inactive position and the active position in at least one rotating direction around the shaft axis (WA), wherein the bolt drive (24) further comprises a drive shaft (52, 62) rotatably mounted around a drive axis (A, B), separate from the actuating shaft (22), which is coupled to the actuating shaft (22) for joint rotation, wherein the piston-cylinder arrangement (26, 30) is coupled on the other end to a rotation drive formation (50, 60) of the drive shaft (52, 62), in such a way that an extension and/or retraction motion of the piston rod (26b, 30b) relative to the cylinder (26a, 30a) causes the drive shaft (52, 62) to rotate around its drive axis (A, B) and thus, the actuating shaft (22) to rotate around its shaft axis (WA),
**characterized in that** the piston rod (26b, 30b) is also retractable into the cylinder (26a, 30a) and can, at least during an extension or retraction motion, be pivoted around a pivot axis (S) forming an angle with the longitudinal piston rod axis (K26, K30).

2. Remotely actuated bolt trailer coupling (10) according to Claim 1,
**characterized in that** the drive axis (A, B) and the shaft axis (WA) are coaxial.

3. Remotely actuatable bolt trailer coupling (10) according to one of the preceding claims,
**characterized in that** the cylinder (26a, 30a) is connected to the thrust bearing (44, 46) affixed to the coupling body.

4. Remotely actuatable bolt trailer coupling (10) according to one of the preceding claims,
**characterized in that** it comprises a bearing formation having an thrust bearing (44, 46) and two shaft bearing sections affixed to the coupling body, arranged at an axial distance from one another in relation to the drive axis (A, B), each with a rotating bearing (56, 66) of the drive shaft (52, 62).

5. Remotely actuatable bolt trailer coupling (10) according to Claim 4,
**characterized in that** the bearing formation is a bearing component (40, 42) configured separately from the coupling body (12) and connected thereto, preferably a U-shaped bearing component (40, 42), in which the legs, arranged at a distance from one another (40b, 42b), form the shaft bearing sections, and in which the base (40a, 42a) connecting the legs (40b, 42b) forms the thrust bearing (44, 46).

6. Remotely actuatable bolt trailer coupling (10) according to one of the preceding claims,
**characterized in that** the piston-cylinder arrangement (26, 30) comprises a membrane cylinder (38, 32).

7. Remotely actuatable bolt trailer coupling (10) according to one of the preceding claims,
**characterized in that** the piston-cylinder arrangement (26, 30) is configured adjacent to the bolt housing (14), preferably in such a way that the longitudinal piston rod axis (K26, K30) forms an angle of no more than 20 degrees with a parallel to the coupling axis (KA).

8. Remotely actuatable bolt trailer coupling (10) according to one of the preceding claims,
**characterized in that** a panel formation (34, 36) features a panel component (38), preferably configured separately from the coupling body (12) and connected thereto, which protects the piston-cylinder arrangement (26, 30) against an approaching component in a direction parallel to the coupling axis (KA).

9. Remotely actuatable bolt trailer coupling (10) according to one of the preceding claims,
**characterized in that** the bolt drive (24) features a further piston-cylinder arrangement (30) as well as a further drive shaft (62) rotatably mounted around a further drive axis (B), separate from the actuating shaft (22), which is coupled to the actuating shaft (22) for joint rotation, wherein the further piston-cylinder arrangement (30) features, along its further longitudinal piston rod axis (K30), a further piston rod (30b), extensible from a further cylinder (30a) and retractable into the further cylinder (30a), which is coupled to a further thrust bearing affixed to the coupling body (46) on one end and to a further drive shaft (62) with a rotating drive formation (60) on the other end, in such a way that an extension and/or retraction motion of the further piston rod (30b) causes, relative to the further cylinder (30a), a rotation of the further actuating shaft (62) around the further drive axis (B), and thus a rotation of the actuating shaft (22) around its shaft axis (WA), wherein preferably the further piston-cylinder arrangement (30) and/or the further drive shaft (62) is developed further in accordance with one or more of Claims 2 to 9, provided that the terms "further piston-cylinder arrangement," "further piston rod," "further longitudinal piston rod axis," "further cylinder," "further thrust bearing affixed to the coupling body," "further drive shaft," and "further drive axis" take the place of the corresponding terms "piston-cylinder arrangement," "piston rod," "longitudinal piston rod axis," "cylinder," "thrust bearing affixed to the coupling body," "drive shaft," and "drive axis" referenced in Claims 2 to 9.

10. Remotely actuatable bolt trailer coupling (10) according to Claim 9,
**characterized in that** an actuation of the further piston-cylinder arrangement (30) causes the actuating shaft (22) to rotate in the rotating direction opposite to the actuation of the piston-cylinder arrangement (26), wherein preferably an extension motion of the further piston rod (30b) relative to the further cylinder (30a) causes the actuating shaft (22) to rotate in the rotating direction opposite to the extension motion of the piston rod (26b) relative to the cylinder (26).

11. Remotely actuatable bolt trailer coupling (10) according to Claim 9 or 10, including the details of Claim 7,
**characterized in that** the piston-cylinder arrangement (26) and the further piston-cylinder arrangement (30) are configured adjacent to the bolt housing (14), respectively, on different, preferably opposite, sides of the bolt housing (14), wherein preferably the further piston-cylinder arrangement (30) is configured in such a way that the further longitudinal piston rod axis (K30) forms an angle of no more than 20 degrees with a parallel to the motion axis (BA) between the inactive and the active position.

12. Remotely actuatable bolt trailer coupling (10) according to Claim 9 to 11, including the details of Claim 8,
**characterized in that** it features a further panel formation (36), preferably a further panel component configured separately from the coupling body (12) and connected thereto, which protects the piston-cylinder arrangement (30) against an approaching component in a direction parallel to the coupling axis (KA), wherein the panel formation (34) and the further panel formation (36) preferably are formed from a single piece.

13. Remotely actuatable bolt trailer coupling (10) according to one of the preceding claims,
**characterized in that** the actuating shaft (22) penetrates the bolt housing (14), preferably both orthogonally to the coupling axis (KA) and orthogonally to the motion axis (BA).

## Revendications

1. Accouplement de remorquage à boulon actionnable à distance (10) avec un corps d'accouplement (12), comprenant un boîtier de réception de boulon (14) et un museau d'accouplement (16) adjacent au boîtier de réception de boulon (14), dans lequel un anneau de remorquage peut être inséré comme prévu le long d'un axe d'accouplement (KA), dans lequel un boulon d'accouplement (18) est mobile le long d'un axe de mouvement (BA) entre une position inactive, dans laquelle il est plus fortement désengagé du museau d'accouplement (16) et plus fortement engagé dans le boîtier de réception de boulon (14), et une position active, dans laquelle il est plus fortement engagé dans le museau d'accouplement (16) et plus fortement désengagé du boîtier de réception de boulon (14), dans lequel l'accouplement de remorquage à boulon (10) comprend un arbre d'actionnement (22) qui peut tourner autour d'un axe d'arbre (WA) et qui est accouplé au boulon d'accouplement (18) par un dispositif de transmission (23) transmettant la force et le mouvement de telle sorte qu'un actionnement de l'arbre d'actionnement (22) dans au moins une direction de rotation provoque un mouvement du boulon d'accouplement (18) entre sa position inactive et sa position active dans au moins une direction, dans lequel l'accouplement de remorquage à boulon (10) comprend un entraînement à boulon (24) avec un agencement piston-cylindre (26, 30), qui présente une tige de piston (26b, 30b) pouvant être étendue le long de son axe longitudinal de tige de piston (K26, K30) à partir d'un cylindre (26a, 30a), dans lequel l'agencement piston-cylindre (26, 30) est accouplé à une extrémité à une butée fixe au corps d'accouplement (44, 46) et à l'autre extrémité est relié à l'arbre d'actionnement (22) de telle sorte que, suite à un mouvement d'extension et/ou de rétraction de la tige de piston (26b, 30b) par rapport au cylindre (26a, 30a), l'arbre d'actionnement (22) peut être actionné en rotation autour de l'axe d'arbre (WA) pour déplacer le boulon d'accouplement (18) entre la position inactive et la position active dans au moins une direction de rotation, l'entraînement de boulon (24) comprenant en outre un arbre d'entraînement (52, 62) qui est monté de manière rotative séparément de l'arbre d'actionnement (22) autour d'un axe d'entraînement (A, B) et est accouplé à l'arbre d'actionnement (22) pour une rotation commune, dans lequel l'agencement piston-cylindre (26, 30) est accouplé à l'autre extrémité à une formation d'entraînement en rotation (50, 60) de l'arbre d'entraînement (52, 62) de sorte qu'un mouvement d'extension et/ou de rétraction de la tige de piston (26b, 30b) par rapport au cylindre (26a, 30a) provoque une rotation de l'arbre d'entraînement (52, 62) autour de son axe d'entraînement (A, B) et ainsi une rotation de l'arbre d'actionnement (22) autour de son axe d'arbre (WA),
**caractérisé en ce que** la tige de piston (26b, 30b) peut également être rétractée dans le cylindre (26a, 30a) et, au moins pendant un mouvement d'extension et/ou de rétraction, peut être pivotée autour d'un axe de pivotement (S) formant un angle avec l'axe longitudinal (K26, K30) de la tige de piston.

2. Accouplement de remorquage à boulon actionnable à distance (10) selon la revendication 1,
**caractérisé en ce que** l'axe d'entraînement (A, B) et l'axe d'arbre (WA) sont coaxiaux.

3. Accouplement de remorquage à boulon actionnable à distance (10) selon l'une des revendications précédentes,
**caractérisé en ce que** ledit cylindre (26a, 30a) est relié à ladite butée fixe au corps d'accouplement (44, 46).

4. Accouplement de remorquage à boulon actionnable à distance (10) selon l'une des revendications précédentes,
**caractérisé en ce qu'**il comprend une formation de palier comportant la butée (44, 46) et deux sections de palier d'arbre fixes au corps d'accouplement et disposées à distance axiale l'une de l'autre par rapport à l'axe d'entraînement (A, B) et comportant chacune un palier de rotation (56, 66) de l'arbre d'entraînement (52, 62).

5. Accouplement de remorquage à boulon actionnable à distance (10) selon la revendication 4,
**caractérisé en ce que** la formation de palier est une pièce de palier (40, 42) formée séparément du corps d'accouplement (12) et reliée à celui-ci, de préférence une pièce de palier (40, 42) en forme de U dont les branches (40b, 42b) disposées à distance les unes des autres forment les sections de palier d'arbre et dont la base (40a, 42a) reliant les branches (40b, 42b) forme la butée (44, 46).

6. Accouplement de remorquage à boulon actionnable à distance (10) selon l'une des revendications précédentes,
**caractérisé en ce que** l'agencement piston-cylindre (26, 30) comprend un cylindre à diaphragme (38, 32).

7. Accouplement de remorquage à boulon actionnable à distance (10) selon l'une des revendications précédentes,
**caractérisé en ce que** l'agencement piston-cylindre (26, 30) est disposé de manière adjacente au boîtier de réception de boulon (14), de préférence de telle sorte que l'axe longitudinal de tige de piston (K26, K30) forme un angle non supérieur à 20° avec une ligne parallèle à l'axe d'accouplement (KA).

8. Accouplement de remorquage à boulon actionnable à distance (10) selon l'une des revendications précédentes,
**caractérisé en ce qu'il** comprend une formation de revêtement (34, 36), de préférence un composant de revêtement (38) formé séparément du corps d'accouplement (12) et relié à celui-ci, qui protège l'agencement piston-cylindre (26, 30) contre l'approche d'un composant dans une direction parallèle à l'axe d'accouplement (KA).

9. Accouplement de remorquage à boulon actionnable à distance (10) selon l'une des revendications précédentes,
**caractérisé en ce que** l'entraînement à boulon (24) comprend un autre agencement piston-cylindre (30) et un autre arbre d'entraînement (62) monté à rotation séparément de l'arbre d'actionnement (22) autour d'un autre axe d'entraînement (B) et accouplé à l'arbre d'actionnement (22) pour une rotation commune, dans lequel l'autre agencement piston-cylindre (30) présente une autre tige de piston (30b) qui peut être étendue le long de son autre axe longitudinal de tige de piston (K30) à partir d'un autre cylindre (30a) et qui peut être rétractée dans l'autre cylindre (30a), et qui est accouplée de cette manière, à une extrémité, à une autre butée fixe au corps d'accouplement (46) et, à l'autre extrémité, à une formation d'entraînement en rotation (60) de l'autre arbre d'entraînement (62) de telle manière qu'un mouvement d'extension et/ou de rétraction de l'autre tige de piston (30b) par rapport à l'autre cylindre (30a) provoque une rotation de l'autre arbre d'entraînement (62) autour de l'autre axe d'entraînement (B) et ainsi une rotation de l'arbre d'actionnement (22) autour de son axe d'arbre (WA) dans lequel l'autre agencement piston/cylindre (30) et/ou l'autre arbre d'entraînement (62) est de préférence formé en outre selon une ou plusieurs des revendications 2 à 9, avec la condition que que les termes "autre agencement piston-cylindre", "autre tige de piston", "autre axe longitudinal de tige de piston", "autre cylindre", "autre butée fixe au corps d'accouplement", "autre arbre d'entraînement" et "autre axe d'entraînement" remplacent les termes correspondants respectifs "agencement piston-cylindre", "tige de piston", "axe longitudinal de tige de piston", "cylindre", "butée fixe au corps d'accouplement", "arbre d'entraînement" et "axe d'entraînement" mentionnés dans les revendications 2 à 9.

10. Accouplement de remorquage à boulon actionnable à distance (10) selon la revendication 9,
**caractérisé en ce qu'**un actionnement de l'autre agencement piston-cylindre (30) entraîne l'arbre d'actionnement (22) dans la direction de rotation opposée au mouvement rotatif comparé à l'actionnement de l'agencement piston-cylindre (26), dans lequel de préférence un mouvement d'extension de l'autre tige de piston (30b) par rapport à l'autre cylindre (30a) entraîne l'arbre d'actionnement (22) dans la direction de rotation opposé au mouvement rotatif en tant que mouvement d'extension de la tige de piston (26b) par rapport au cylindre (26).

11. Accouplement de remorquage à boulon actionnable à distance (10) selon la revendication 9 ou 10, y compris la revendication 7,
**caractérisé en ce que** l'agencement piston-cylindre (26) et l'autre agencement piston-cylindre (30) sont chacun disposés à côté du boîtier de réception de boulon (14), sur des côtés différents, de préférence opposés, du boîtier de réception de boulon (14), de préférence des côtés opposés du boîtier de réception de boulon (14), dans lequel l'autre agencement piston-cylindre (30) est de préférence disposé de telle sorte que l'autre axe longitudinal de tige de piston (K30) forme un angle non supérieure à 20° avec une ligne parallèle à l'axe de déplacement (BA) entre la position inactive et la position active.

12. Accouplement de remorquage à boulon actionnable à distance (10) selon l'une des revendications 9 à 11, y compris la revendication 8,
**caractérisé en ce qu'**il comprend une autre formation de revêtement (36), de préférence un autre composant de revêtement formé séparément du corps d'accouplement (12) et relié à celui-ci, qui protège l'autre agencement piston-cylindre (30) contre l'approche d'un composant dans une direction parallèle à l'axe d'accouplement (KA), dans lequel la formation de revêtement (34) et l'autre formation de revêtement (36) sont de préférence formées d'un seul tenant l'une avec l'autre.

13. Accouplement de remorquage à boulon actionnable à distance (10) selon l'une des revendications précédentes,
**caractérisé en ce que** l'arbre d'actionnement (22) traverse le boîtier de réception de boulon (14), de préférence à la fois orthogonalement à l'axe d'accouplement (KA) et orthogonalement à l'axe de mouvement (BA).
